# EUROPÄISCHE PATENTSCHRIFT

(11) **EP 0 590 616 B1**
(45) Veröffentlichungstag und Bekanntmachung des Hinweises auf die Patenterteilung: **03.01.1996**
(21) Anmeldenummer: 93115659.0
(22) Anmeldetag: 29.09.1993
(51) Int. Cl.: H02G 3/04

(54) **Deckel für Kabelkanäle**
Cover for cable duct
Couvercle pour canalisation de cable

(30) Priorität: 01.10.1992 DE 9213231 U
(43) Veröffentlichungstag der Anmeldung: 06.04.1994
(73) Patentinhaber: Tehalit GmbH, D-67716 Heltersberg (DE)
(72) Erfinder: Krietemeyer, Rolf, Dipl.-Ing., D-67663 Kaiserslautern (DE); Schneckmann, Horst, D-67705 Trippstadt (DE)
(74) Vertreter: Patentanwälte Dipl.-Ing. F.W. Möll Dipl.-Ing. H.Ch. Bitterich

(56) Entgegenhaltungen:
- DE-A- 4 036 249

## Beschreibung

Die Erfindung betrifft Deckel aus Metall-, insbesondere Stahlblech mit U-förmigem Querschnitt für Kabelkanäle gemäß dem Oberbegriff des Anspruchs 1.

Kabelkanäle aus Kunststoff oder Metall sind weltweit in großen Stückzahlen im Einsatz. Sie bieten den großen Vorteil, elektrische Leitungen aller Art bequem und ästhetisch in Gebäuden verlegen und nachrüsten zu können. Bestehen die Kabelkanäle aus Metall, meist Aluminium oder Stahlblech, ist unbedingt Sorge für einen wirksamen Potentialausgleich bzw. Erdungsanschluß zu tragen, um eine Gefährdung der Benutzer durch Kurzschlüsse, verschleppte Spannungen und dergleichen zu verhindern.

Metallische Kabelkanäle sind daher stets mit Einrichtungen versehen, die ein einfaches Anbringen von Potentialausgleichsleitungen ermöglichen. Bewährt haben sich spezielle Anschlußfahnen, auf die Steckverbinder aufgeschoben werden können.

Ursprünglich waren diese sogenannten Erdungsfahnen nachträglich angebracht worden. Seit einiger Zeit werden jedoch die Anschlußfahnen aus dem Blech der Kabelkanäle selbst hergestellt. Hierzu wird ein dreiseitiger Freischnitt ausgeführt und die so gebildete Fahne soweit abgebogen, daß die Steckverbinder bequem aufgeschoben werden können.

Erdungsfahnen befinden sich ebenso an den Unterteilen der Kabelkanäle wie an den Deckeln. Ein neueres Beispiel hierfür zeigt die DE-A-40 36 249. Bei dieser werden die Erdungsfahnen durch dreiseitiges Freischneiden von Bereichen der Seitenwand des Kanaldeckels und durch anschließendes Abwinkeln des freigeschnittenen Bereichs dieser Seitenwand gebildet. Nachteilig an dieser Lösung ist jedoch, daß der Deckel beim Abnehmen vom Kanalunterteil an den Stellen, wo die Anschlußfahnen sitzen, sehr leicht abknickt.

Der vorliegenden Erfindung liegt daher die Aufgabe zugrunde, die Knickfestigkeit der Deckel für Kabelkanäle zu verbessern.

Diese Aufgabe wird gelöst durch einen gattungsgemäßen Deckel mit den kennzeichnenden Merkmalen des Anspruchs 1.

Dank des durchgehenden Materialstegs an der freien Kante der U-Schenkel bleibt die hohe Knicksteifigkeit der herkömmlichen Deckel erhalten. Der erfindungsgemäße Deckel kann daher im praktischen Betrieb wie ein Deckel behandelt werden, der keine integrierten Anschlußfahnen besitzt und dessen U-Schenkel daher völlig unbearbeitet sind.

Anhand der Zeichnung soll die Erfindung in Form eines Ausführungsbeispiels näher erläutert werden. Es zeigen
- Fig. 1: eine Draufsicht auf die Innenseite eines Metallblechdeckels für Kabelkanäle,
- Fig. 2: eine Seitenansicht des Deckels der Fig. 1 und
- Fig. 3: eine Frontansicht des Deckels der Fig. 1.

Die Figuren zeigen einen Deckel 1 für Kabelkanäle, bestehend aus einem Blechband, beispielsweise Stahlblech, dessen Seitenkanten so abgewinkelt sind, daß ein U-förmiger Querschnitt entsteht. Die U-Schenkel 2 sind an ihren freien Kanten 5 so profiliert, daß eine Rastverbindung mit dem nicht dargestellten Unterteil eines Kabelkanals möglich ist.

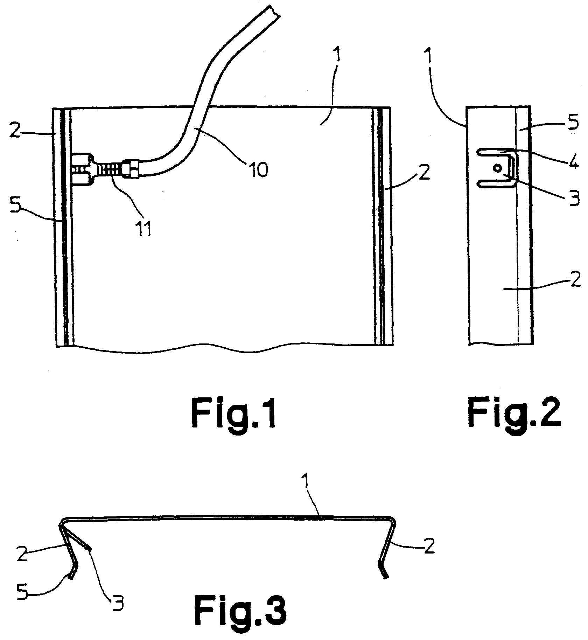

Wie insbesondere Fig. 2 erkennen läßt, ist im Bereich des U-Schenkels 2 ein etwa U-förmiger Freischnitt 4 durch Schneiden oder Stanzen hergestellt worden, so daß eine Anschlußfahne 3 verbleibt. Die Abmessungen der Anschlußfahne 3 sind so gewählt, daß einer der handelsüblichen Steckverbinder 11 aufgeschoben werden kann. Dies ist in Fig. 1 dargestellt.

Es versteht sich, daß die Anschlußfahne 3 auch andere Formen und Abmessungen haben kann, beispielsweise um elektrische Potentialausgleichsleitungen 10 direkt anklemmen, anschweißen oder anlöten zu können.

Um das Aufstecken des Steckverbinders 11 zu erleichtern, kann die Anschlußfahne 3 nach innen gebogen werden, wie in Fig. 3 dargestellt. In allen Fällen verbleibt jedoch an der freien Kante der U-Schenkel 2 ein durchgehender Materialsteg 5, der dem Deckel 1 trotz der durch den Freischnitt 4 bedingten Materialschwächung die erforderliche Knickfestigkeit verleiht.

## Patentansprüche

1. Deckel (1) aus Metall- insbesondere Stahlblech mit U-förmigem Querschnitt für Kabelkanäle, wobei die U-Schenkel (2) für eine Rastverbindung mit dem Kabelkanal profiliert sind und in Abständen Anschlußfahnen (3), hergestellt durch Freischneiden und Biegen, zum Anbringen bzw. Aufstecken von elektrischen Leitungen (10) bzw. Steckverbindern (11) aufweisen, dadurch gekennzeichnet, daß der die Anschlußfahne (3) umgebende Freischnitt (4) so positioniert ist, daß an der freien Kante des U-Schenkels (2) ein durchgehender Materialsteg (5) verbleibt.

## Claims

1. A cover (1) of sheet metal, in particular sheet steel, of U-shaped cross-section for cable conduits, wherein the U-arms (2) are profiled for a locking connection with the cable conduit and have at intervals connecting lugs (3), which are formed by cutting and bending, for attaching and fitting electric leads (10) and plug-type connectors (11) respectively, characterised in that the clearance cut (4) surrounding the connecting lug (3) is positioned so that a continuous material web (5) remains at the free edge of the U-arm (2).

## Revendications

1. Couvercle (1) en tôle métallique, en particulier en tôle d'acier, ayant une section transversale en U, pour des conduites de câbles, les branches (2) du U étant profilées pour assurer une liaison à encliquetage avec la conduite de câbles et présentant, disposées de façon espacée, des pattes de raccordement (3), réalisées par découpage et pliage, pour permettre le montage, respectivement l'enfichage de lignes électriques (10), respectivement de connecteurs (11), caractérisé en ce que la découpe (4) entourant la patte de raccordement (3) est positionnée de manière qu'il subsiste une nervure de matériau (5) continue sur l'arête libre de la branche (2) du U.
